# EUROPEAN PATENT SPECIFICATION

(11) **EP 3 752 362 B1**
(45) Date of publication and mention of the grant of the patent: **17.07.2024**
(21) Application number: 19707570.8
(22) Date of filing: 12.02.2019
(51) Int. Cl.: B32B 27/30, C08F 261/04, C08F 263/04, C08K 5/053, C09J 4/06

(54) **LINERLESS WATER-ACTIVATED WATER-BASED EMULSION**
TRÄGERPAPIERLOSE WASSERAKTIVIERTE WÄSSRIGE EMULSION
ÉMULSION AQUEUSE SANS SUPPORT ACTIVÉE PAR L'EAU

(30) Priority: 13.02.2018 IN 201811005329
(43) Date of publication of application: 23.12.2020
(73) Proprietor: Avery Dennison Corporation, Mentor, OH 44060 (US)
(72) Inventor: JADHAV, Dipak, S., Glendale, CA 91203 (US); NAIK, Parimal, Glendale, CA 91203 (US); PATIL, Virendrasing, J., Glendale, CA 91203 (US); PATIL, Dhananjay, Glendale, CA 91203 (US)
(74) Representative: HGF
(86) International application number: PCT/US2019/017567
(87) International publication number: WO 2019/160826

(56) References cited:
- EP-A1- 2 363 427
- CN-A- 107 267 095
- US-A- 6 153 288
- US-A1- 2011 033 698

## Description

### CROSS REFERENCE TO RELATED APPLICATION

The present application claims the benefit of Indian Provisional Patent Application No. 201811005329 filed February 13, 2018.

### FIELD

The present disclosure relates generally to water-activated adhesives useful in the construction of linerless labels.

### BACKGROUND

Activable adhesive systems differ from pressure sensitive adhesive systems in that the latter typically include a tacky adhesive that bonds to a substrate with the application of pressure, while the former include an adhesive that generally lacks tack until an activation occurs. Because activable adhesives are not initially tacky, they can be stored or supplied in a linerless form. This is in contrast to pressure sensitive adhesives, which are often used with a silicone-coated release liner that cannot be easily reused or recycled as paper. For this reason and others, linerless adhesives are of great interest for providing benefits associated with improved economics, sustainability, and environmental friendliness.

Activable labels are supplied to the end user in a non-tacky state, and then the labels are activated, e.g., the label's adhesive is activated, to a tacky state just prior to application to the intended substrate. Oftentimes, activable labels are printed prior to activation. Known activation schemes include the use of ultraviolet ("UV") energy to heat the adhesive, corona treatment to activate the surface, radiant heat to warm the adhesive, moisture to activate a rewettable adhesive, crushing to release a microencapsulated activator material, mechanical or heat means to remove an over-coated detackifying layer, or ultrasound energy.

An example of activable labels can be found in U.S. Patent No. 9,508,272, which describes methods for applying a liner-free, or liner-less label, to a substrate, particularly glass or plastic, e.g., PET, substrates. The method includes applying an adhesive composition, such as a polymeric coating, to a label face sheet, activating the adhesive composition with an activating fluid, and contacting the label to the substrate. The activating fluid is preferably a mixture of water and one or more organic solvents, such as low molecular weight alcohols. In some embodiments, the labels exhibit a percent fiber tear greater than about 50, 55, 60, 65, 70, 75, 80, 85, 90, or 95% after one, two, three, four, or five minutes. In particular embodiments, the labels exhibits a percent fiber tear greater than 60, 65, 70, 75, 80, 85, 90, or 95% after two minutes.

The fluid activable adhesive compositions of U.S. Patent No. 9,051,495 contain at least two polymers with different hydrophilicities. The hydrophilic polymer has quick tack when exposed to a hydrophilic solvent, such as water or other aqueous solvent, while the hydrophobic polymer provides strong adhesion to a paper or polymeric substrate. The adhesive composition may contain particulate fillers which enable fast exhaustion of the activation fluid out of the adhesive when applied to a substrate, thereby allowing the hydrophobic polymers of the adhesive composition to achieve strong adhesion of the liner-free label to the paper or polymeric substrate. The particulate fillers may also function as anti-blocking agents when liner-free label media are tightly wound in a roll. The adhesive compositions may be used not only on paper, cardboard, and metal, but also on glass and plastics commonly used in commercial applications.

U.S. Patent Application Publication No. US 2015/0275052 describes fluid activable, multilayer adhesive compositions for use with liner-free labels, and methods of making and using thereof. The compositions contain a functional layer, such as an adhesive layer, which is applied to the label and a barrier layer which is applied on top of the adhesive layer. The multilayer composition prevents the adhesive layer on the label from interacting with the face of an adjacent label, particularly when the labels are stored as coils or folded stacks.

International Patent Application Publication No. WO 2016/183368 describes fluid activable adhesive labels, label systems, and methods of making and using thereof. These labels are particularly useful with facesheets with low MVTR due to the inclusion and placement of sequestration components within the labels. The sequestration components are either embedded in an adhesive layer, in a separate tie layer between the adhesive layer and the substrate, incorporated in the substrate, or incorporated into the adherend. Preferably the labels are clear. Following application of an activation fluid and, preferably following activation of the activable adhesive layer, the sequestration materials adsorb the fluid from the polymer adhesive components over time, such as for about 0 to 72 hours This dries the label and wets the sequestration components. Optionally, the container with the label is also subjected to a drying step to dry the sequestration components.

CN107267095A relates to the technical field of carton box adhesive synthesis, and discloses an adhesive for a beverage carton box.

US2011/033698A1 describes a liner-free label activator, adapted to be joined to another piece of equipment, such as a thermal printer.

Even in view of these references, the need exists for new and improved low-cost activable adhesives capable of demonstrating advantageous activation kinetics and adhesive performance when used with a variety of different facestock types and substrates.

### SUMMARY

According to a first aspect, there is provided a water-activated adhesive comprising: an aqueous emulsion of vinyl acetate; polyvinyl alcohol; and glycerin, wherein the concentration of polyvinyl alcohol in the water-activated adhesive ranges from 25 wt% to 45 wt%.

Preferably, the concentrations of the aqueous emulsion in the adhesive ranges from 25 wt% to 65 wt%. Preferably, the concentration of vinyl acetate in the aqueous emulsion ranges from 4 wt% to 59 wt%. The adhesive further comprises polyvinyl alcohol and the concentration of the polyvinyl alcohol in the adhesive ranges from 25 wt% to 45 wt%. The adhesive further comprises glycerin. Preferably, the concentration of glycerin in the adhesive ranges from 3 wt% to 10 wt%. Preferably, the adhesive further comprises one or more of polyethylene glycol, polyethyleneimine, a rosin ester, poly(2-ethyl-2-oxazoline), and clay. Preferably, the adhesive has a viscosity ranging from 0.15 N·s/m² (150 cps) to 3.5 N·s/m² (3500 cps). Preferably, the adhesive has a solids content ranging from 25 wt% to 70 wt%.

According to a second aspect, there is provided a label comprising: a facestock layer capable of receiving printed indicia; and an adhesive layer comprising the water-activated adhesive of the first aspect.

Preferably the adhesive layer has a coat weight ranging from 5 gsm to 20 gsm. Preferably, the label does not comprise a liner.

According to a third aspect, there is provided a method for producing a water-activated adhesive, the method comprising: providing polyvinyl alcohol, glycerin, and an aqueous emulsion of vinyl acetate; and combining the polyvinyl alcohol, the glycerin, and the aqueous emulsion to produce the water-activated adhesive, wherein the concentration of polyvinyl alcohol in the water-activated adhesive ranges from 25 wt% to 45 wt%.

Preferably, the adhesive comprises 25 wt% to 65 wt% aqueous emulsion of vinyl acetate, 25 wt% to 45 wt% polyvinyl alcohol, and 3 wt% to 10 wt% glycerin.

Also described herein is a method of making a label, the method comprising producing a water-activated adhesive using a provided method. The method further comprises coating the water-activated adhesive on a facestock capable of receiving printed indicia. Preferably the coating generates an adhesive layer having a coat weight ranging from 5 gsm to 20 gsm. Preferably, the method further comprises curing the coated facestock at a temperature greater than 70 °C. Preferably, the method further comprises cutting the coated facestock.

Also described herein is a method of applying a label to a surface, the method comprising providing a surface having an outer face, and a provided label. The method further comprises activating the label by contacting the label with an activation liquid comprising water. The method further comprises adhering the activated label to the outer face of the surface, thereby applying the label to the surface. In some instances, the applied label is repositionable for at least 1 minute after the adhering. In some instances, the applied label is bonded to the outer face of the surface less than 2 hours after the adhering.

Also described herein is a labeled surface. The labeled surface comprises a surface having an outer face. The labeled surface further comprises a provided label adhered to the outer face of the substrate.

Also described herein is a system for producing labeled articles, the system comprising a web of label stock. The label stock comprises a facestock capable of receiving printed indicia, and an adhesive layer comprising a provided water-activated adhesive. The system further comprises a cutting station for forming a plurality of cut labels from the web of label stock. The system further comprises an activation station for activating the cut labels. Preferably, the activation station comprises a roller, at least a portion of which is covered by a sponge. Preferably, the system further comprises a reservoir comprising an activation liquid comprising water. Preferably, the system further comprises a plurality of articles to be labeled. Preferably, the system further comprises a conveyor for moving the plurality of articles. Preferably, the system further comprises a label carrier for moving the cut labels. Preferably, the label carrier comprises a vacuum.

### BRIEF DESCRIPTION OF DRAWINGS

The disclosure is described in detail below with reference to the appended drawings, wherein like numerals designate similar parts.

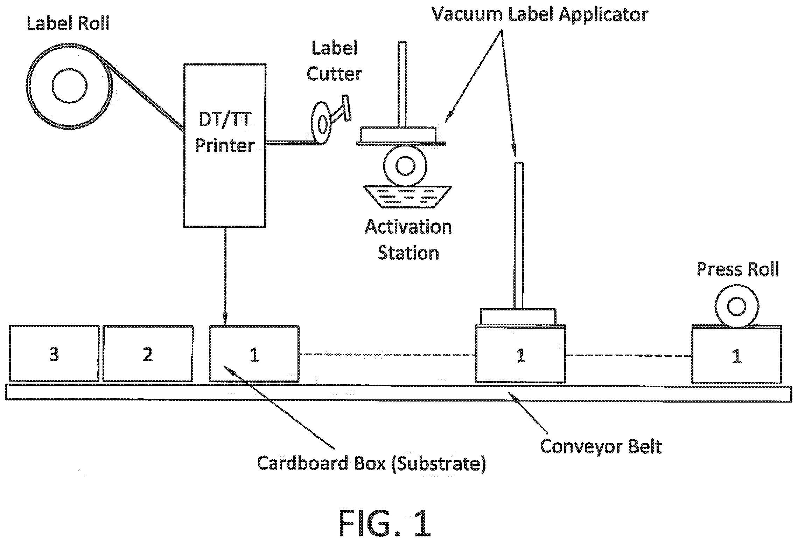

FIG. 1 illustrates a system for producing labeled articles in accordance with an embodiment.

### DETAILED DESCRIPTION

The present disclosure generally relates to water-activated adhesives that, when employed in linerless labels to be applied to an article, provide advantageous properties that include low costs, fast activation, and strong bonding to a variety of different label facestock types and article substrate materials. For example, it is beneficial for an activable adhesive to develop tack quickly and maintain this tack for at least 1 minute after activation. It is also advantageous for an activated adhesive to bond to an article in less than 2 hours. Another desired property for activable adhesives is an ability to be used in paper facestock labels that can be strongly adhered to, and easily washed off of, glass bottles. The inventors have now discovered that a particular composition according to the first aspect, comprising polyvinyl alcohol, glycerin, and an aqueous emulsion of vinyl acetate surprisingly provides for these and other needs.

Without being bound to a particular theory, it is believed that when an activation liquid, e.g. water, is applied to the provided adhesives, the polar liquid and the tackifying elements, e.g., glycerin and polyvinyl alcohol, of the adhesive form a tacky suspension material. The tacky material is able to create a weak, temporary bond with the substrate to which the adhesive is applied. Additionally, it is believed that this tacky material puddles, coalesces, or otherwise agglomerates into discrete pools at the interface between the substrate and the adhesive. Such pooling of the tacky material thereby exposes the underlying adhesive layer for making the secondary bond with the substrate. The exposed adhesive layer then forms this stronger and more permanent bond with the substrate. Advantageously, the activation liquid can be free of organic solvents, e.g., the activation liquid can consist of water, or can consist essentially of water. The activation of the adhesive also does not require the application of heat, or the process of a chemical reaction.

Another important attribute of the provided activable adhesive is its ability to stay in an activated state, e.g., in a tacky state, long enough to allow application of an activable linerless label (containing the adhesive) to an item, such as a container or an article, before the adhesive loses its tackiness. This time period is commonly referred to as an "open time" of the adhesive. Depending on the application speed of the activable linerless label to the item and the distance between an activating device and a point where the activable linerless label is applied to the item, open time could be a fraction of a second and as long as several minutes or more. The adhesive can be repositionable for a period of, for example, one minute or longer after application of the activable linerless label to the item so that minor adjustments can be made to the label's position on the item immediately after application. The adhesive then can form a strong bond between the label and the item, in some embodiments within two minutes or less after activation of the adhesive, so that the label cannot inadvertently be removed from, or repositioned on, the item.

In certain embodiments, the bonded label can be washed from an article, such as a glass beverage bottle, without leaving any significant adhesive or label residue on the article after label removal. Conventionally, labels from wet strength facestock are used in beverage labeling industries to provide such complete removal of the label. However, these wet strength papers can be more expensive than normal semi-gloss paper facestock. Advantageously, the water-activated adhesives and labels provided herein demonstrate very good bonding and washing properties when configured with less expensive semi-gloss paper as well as conventional wet strength facestock. This can provide a benefit not only to bottle washer plants, but also to label manufacturer, coaters, and converters by improving their energy and heating efficiency, process and materials costs, and caustic usage.

### Adhesives

The water-activated adhesive of the first aspect comprises an aqueous emulsion of vinyl acetate; polyvinyl alcohol; and glycerin, wherein the concentration of polyvinyl alcohol in the water-activated adhesive ranges from 25 wt% to 45 wt%. In some embodiments, the adhesive does not demonstrate any significant tack under typical ambient conditions prior to being activated. For example, after storing a roll of labels coated with the provided adhesive at storage conditions of 40 °C and 70% relative humidity, the roll can be manually unwound with little to no peeling resistance observed between the adhesive layer of each label and contacting facestock layers of other labels in the roll. The tack of these provided adhesives can be activated by application of, for example, water, moisture, or water vapor which in turn allows the adhesive to adhere to various substrates such as paper, cardboard, wood, plastic, glass, metal, and others.

In certain embodiments, the concentration of the aqueous emulsion in the adhesive ranges from 25 wt% to 65 wt%, e.g., from 25 wt% to 49 wt%, from 29 wt% to 53 wt%, from 33 wt% to 57 wt%, from 37 wt% to 61 wt%, or from 41 wt% to 65 wt%. In terms of upper limits, the concentration of the aqueous emulsion in the adhesive can be less than 65 wt%, e.g., less than 61 wt%, less than 57 wt%, less than 53 wt%, less than 49 wt%, less than 45 wt%, less than 41 wt%, less than 37 wt%, less than 33 wt%, or less than 29 wt%. In terms of lower limits, the concentration of the aqueous emulsion in the adhesive can be greater than 25 wt%, e.g., greater than 29 wt%, greater than 33 wt%, greater than 37 wt%, greater than 41 wt%, greater than 45 wt%, greater than 49 wt%, greater than 53 wt%, greater than 57 wt%, or greater than 61 wt%. Lower aqueous emulsion concentrations, e.g., concentrations less than 25 wt%, and higher aqueous emulsion concentrations, e.g., concentrations greater than 65 wt%, are also contemplated.

The amount of vinyl acetate in the water-activate adhesive can affect, for example, the performance of the adhesive in adhering to substrate and surface materials such as plastic, glass, and cardboard. In some instances, the ability of the adhesive to bond to these more challenging materials with relatively low surface energies can be improved by increasing the concentration of vinyl acetate in the adhesive composition. The concentration of vinyl acetate in the aqueous emulsion can, for example, range from 4 wt% to 59 wt%, e.g., from 4 wt% to 37 wt%, from 9.5 wt% to 42.5 wt%, from 15 wt% to 48 wt%, from 20.5 wt% to 53.5 wt%, or from 26 wt% to 59 wt%. In terms of upper limits, the vinyl acetate concentration in the aqueous emulsion can be less than 59 wt%, e.g., less than 53.5 wt%, less than 48 wt%, less than 42.5 wt%, less than 37 wt%, less than 31.5 wt%, less than 26 wt%, less than 20.5 wt%, less than 15 wt%, or less than 9.5 wt%. In terms of lower limits, the vinyl acetate concentration in the aqueous emulsion can be greater than 4 wt%, e.g., greater than 9.5 wt%, greater than 15 wt%, greater than 20.5 wt%, greater than 26 wt%, greater than 31.5 wt%, greater than 37 wt%, greater than 42.5 wt%, greater than 48 wt%, or greater than 53.5 wt%. Lower vinyl acetate concentrations, e.g., concentrations less than 4 wt%, and higher vinyl acetate concentrations, e.g., concentrations greater than 59 wt%, are also contemplated.

The concentration of polyvinyl alcohol in the water-activated adhesive ranges from 25 wt% to 45 wt%, e.g., from 25 wt% to 37 wt%, from 27 wt% to 39 wt%, from 29 wt% to 41 wt%, from 31 wt% to 43 wt%, or from 33 wt% to 45 wt%. In terms of upper limits, the polyvinyl alcohol concentration in the adhesive can be less than 45 wt%, e.g., less than 43 wt%, less than 41 wt%, less than 39 wt%, less than 37 wt%, less than 35 wt%, less than 33 wt%, less than 31 wt%, less than 29 wt%, or less than 27 wt%. In terms of lower limits, the polyvinyl alcohol concentration in the adhesive can be greater than 25 wt%, e.g., greater than 27 wt%, greater than 29 wt%, greater than 31 wt%, greater than 33 wt%, greater than 35 wt%, greater than 37 wt%, greater than 39 wt%, greater than 41 wt%, or greater than 43 wt%.

The combination of vinyl acetate and polyvinyl alcohol can act as a medium for the water activation of the adhesive, and can further promote adhesion after activation. In some cases, the weight ratio of the aqueous vinyl acetate emulsion to the polyvinyl alcohol in the adhesive can, for example, range from 0.6 to 2.3, e.g. from 0.6 to 1.62, from 0.77 to 1.79, from 0.94 to 1.96, from 1.11 to 2.13, or from 1.28 to 2.3. In terms of upper limits, the weight ratio of the aqueous emulsion to the polyvinyl alcohol can be less than 2.3, e.g., less than 2.13, less than 1.96, less than 1.79, less than 1.62, less than 1.45, less than 1.28, less than 1.11, less than 0.94, or less than 0.77. In terms of lower limits, the weight ratio of the aqueous emulsion to the polyvinyl alcohol can be greater than 0.6, e.g., greater than 0.77, greater than 0.94, greater than 1.11, greater than 1.28, greater than 1.45, greater than 1.62, greater than 1.79, greater than 1.96, or greater than 2.13. Lower weight ratios, e.g., ratios less than 0.6, and higher weight ratios, e.g., ratios greater than 2.3, are also contemplated.

In certain embodiments, the concentration of glycerin in the water-activate adhesive ranges from 3 wt% to 10 wt%, e.g., from 3 wt% to 7.2 wt%, from 3.7 wt% to 7.9 wt%, from 4.4 wt% to 8.6 wt%, from 5.1 wt% to 9.3 wt%, or from 5.8 wt% to 10 wt%. In terms of upper limits, the glycerin concentration in the adhesive can be less than 10 wt%, e.g., less than 9.3 wt%, less than 8.6 wt%, less than 7.9 wt%, less than 7.2 wt%, less than 6.5 wt%, less than 5.8 wt%, less than 5.1 wt%, less than 4.4 wt%, or less than 3.7 wt%. In terms of lower limits, the glycerin concentration in the adhesive can be greater than 3 wt%, e.g., greater than 3.7 wt%, greater than 4.4 wt%, greater than 5.1 wt%, greater than 5.8 wt%, greater than 6.5 wt%, greater than 7.2 wt%, greater than 7.9 wt%, greater than 8.6 wt%, or greater than 9.3 wt%. Lower glycerin concentrations, e.g., concentrations less than 3 wt%, and higher glycerin concentrations, e.g., concentrations greater than 10 wt%, are also contemplated.

The weight ratio of the aqueous vinyl acetate emulsion to the glycerin in the adhesive can, for example, range from 4 to 10, e.g., from 4 to 7.6, from 4.6 to 8.2, from 5.2 to 8.8, from 5.8 to 9.4, or from 6.4 to 10. In terms of upper limits, the weight ratio of the aqueous emulsion to the glycerin can be less than 10, e.g., less than 9.4, less than 8.8, less than 8.2, less than 7.6, less than 7, less than 6.4, less than 5.8, less than 5.2, or less than 4.6. In terms of lower limits, the weight ratio of the aqueous emulsion to the glycerin can be greater than 4, e.g., greater than 4.6, greater than 5.2, greater than 5.8, greater than 6.4, greater than 7, greater than 7.6, greater than 8.2, greater than 8.8, or greater than 9.4. Lower weight ratios, e.g., ratios less than 4, and higher weight ratios, e.g., ratios greater than 10, are also contemplated.

The polyvinyl alcohol of the adhesive has good compatibility with the glycerin component. Furthermore, after activation of the adhesive with water, the glycerin can act as a plasticizer to promote the activation process and improve the flow of the polyvinyl alcohol. The weight ratio of the polyvinyl alcohol to the glycerin in the adhesive can, for example, range from 2.5 to 7.5, e.g., from 2.5 to 5.5, from 3 to 6, from 3.5 to 6.5, from 4 to 7, or from 4.5 to 7.5. In terms of upper limits, the weight ratio of the polyvinyl alcohol to the glycerin can be less than 7.5, e.g., less than 7, less than 6.5, less than 6, less than 5.5, less than 5, less than 4.5, less than 4, less than 3.5, or less than 3. In terms of lower limits, the weight ratio of the polyvinyl alcohol to the glycerin can be greater than 2.5, e.g., greater than 3, greater than 3.5, greater than 4, greater than 4.5, greater than 5, greater than 5.5, greater than 6, greater than 6.5, or greater than 7. Lower weight ratios, e.g., ratios less than 2.5, and higher weight ratios, e.g., ratios greater than 7.5, are also contemplated.

In some cases, polyethylene glycols having a relatively low molecular weight are used in the formation of the adhesive. When the adhesives include polyethylene glycols, those having lower molecular weight can be selected for use, as these glycols are more readily soluble in water. The use of low molecular weight polyethylene glycols can also provide the adhesive with advantages related to enhanced water activation, and improved anti-static properties. In certain embodiments, the polyethylene glycol in the water-activate adhesive has a number average molecular weight (Mn) ranging from 200 g/mol to 1000 g/mol, e.g., from 200 g/mol to 680 g/mol, from 280 g/mol to 760 g/mol, from 360 g/mol to 840 g/mol, from 440 g/mol to 920 g/mol, or from 520 g/mol to 1000 g/mol. In terms of upper limits, the number-average molecular weight of the polyethylene glycol in the adhesive can be less than 1000 g/mol, e.g., less than 920 g/mol, less than 840 g/mol, less than 760 g/mol, less than 680 g/mol, less than 600 g/mol, less than 520 g/mol, less than 440 g/mol, less than 360 g/mol, or less than 280 g/mol. Lower number average molecular weights, e.g., molecular weights less than 200 g/mol, and higher weight average molecular weights, e.g., molecular weights greater than 1000 g/mol, are also contemplated.

The concentration of polyethylene glycol in the water-activated adhesive can, for example, range from 3 wt% to 10 wt%, e.g., from 3 wt% to 7.2 wt%, from 3.7 wt% to 7.9 wt%, from 4.4 wt% to 8.6 wt%, from 5.1 wt% to 9.3 wt%, or from 5.8 wt% to 10 wt%. In terms of upper limits, the polyethylene glycol concentration in the adhesive can be less than 10 wt%, e.g., less than 9.3 wt%, less than 8.6 wt%, less than 7.9 wt%, less than 7.2 wt%, less than 6.5 wt%, less than 5.8 wt%, less than 5.1 wt%, less than 4.4 wt%, or less than 3.7 wt%. In terms of lower limits, the polyethylene glycol concentration in the adhesive can be greater than 3 wt%, e.g., greater than 3.7 wt%, greater than 4.4 wt%, greater than 5.1 wt%, greater than 5.8 wt%, greater than 6.5 wt%, greater than 7.2 wt%, greater than 7.9 wt%, greater than 8.6 wt%, or greater than 9.3 wt%. Lower polyethylene glycol concentrations, e.g., concentrations less than 3 wt%, and higher polyethylene concentrations, e.g., greater than 10 wt%, are also contemplated.

The water-activated adhesive can also include one or more polyethyleneimines. In certain embodiments, the adhesive includes polyethyleneimine at a concentration less than 5 wt%, e.g., less than 4.5 wt%, less than 4 wt%, less than 3.5 wt%, less than 3 wt%, less than 2.5 wt%, less than 2 wt%, less than 1.5 wt%, less than 1 wt%, or less than 0.5 wt%. Commercial polyethyleneimines suitable for use in the water-activated adhesives of the present disclosure include, for example, LUPASOL^{®} G, available from BASF (Ludwigshafen, Germany)

The water-activated adhesive can also include one or more rosin esters. In certain embodiments, the concentration of rosin ester in the adhesive ranges from 1 wt% to 5 wt%, e.g., from 1 wt% to 3.4 wt%, from 1.4 wt% to 3.8 wt%, from 1.8 wt% to 4.2 wt%, from 2.2 wt% to 4.6 wt%, or from 2.6 wt% to 5 wt%. In terms of upper limits, the rosin ester concentration in the adhesive can be less than 5 wt%, e.g., less than 4.6 wt%, less than 4.2 wt%, less than 3.8 wt%, less than 3.4 wt%, less than 3 wt%, less than 2.6 wt%, less than 2.2 wt%, less than 1.8 wt%, or less than 1.4 wt%. In terms of lower limits, the rosin ester concentration in the adhesive can be greater than 1 wt%, e.g., greater than 1.4 wt%, greater than 1.8 wt%, greater than 2.2 wt%, greater than 2.6 wt%, greater than 3 wt%, greater than 3.4 wt%, greater than 3.8 wt%, greater than 4.2 wt%, or greater than 4.6 wt%. Lower rosin ester concentrations, e.g., less than 1 wt%, and higher rosin ester concentrations, e.g., greater than 5 wt%, are also contemplated. Commercial rosin esters suitable for use in the water-activated adhesive of the present disclosure include, for example, TACOLYN^{™} 3509, available from Eastman (Kingsport, TN)

The water-activated adhesive can also include poly(2-ethyl-2-oxazoline). In certain embodiments, the water-activated adhesive includes poly(2-ethyl-2-oxazoline) at a concentration less than 20 wt%, e.g., less than 18 wt%, less than 16 wt%, less than 14 wt%, less than 12 wt%, less than 10 wt%, less than 8 wt%, less than 6 wt%, less than 4 wt%, or less than 2 wt%. Higher poly(2-ethyl-2-oxazoline) concentrations, e.g., concentrations greater than 20 wt%, are also contemplated.

The water-activated adhesive can also include one or more clays. In certain embodiments, the water-activate adhesive includes clay at a concentration less than 10 wt%, e.g., less than 9 wt%, less than 8 wt%, less than 7 wt%, less than 6 wt%, less than 5 wt%, less than 4 wt%, less than 3 wt%, less than 2 wt%, or less than 1 wt%. Higher clay concentrations, e.g., concentrations greater than 10 wt%, are also contemplated.

Other additives can be added to the water-activated adhesive to obtain a certain desired characteristic. These additives can include, for example, one or more fillers, pigments, waxes, surfactants, talc, powdered silicates, filler agents, defoamers, colorants, antioxidants, UV stabilizers, luminescents, crosslinkers, foam control agents, buffer agents, anti-blocking agents, wetting agents, matting agents, antistatic agents, acid scavengers, flame retardants, processing aids, extrusion aids, and others. Commercial additives suitable for use in the water-activated adhesive of the present disclosure include, for example, DREWPLUS^{™} T-4201 foam control agent, available from Ashland (Covington, KY).

The solids content of the water-activated adhesive can influence other adhesive properties including, for example, the drying time that can be required during label manufacture for the moisture content of the adhesive to be sufficiently reduced. In particular, when the adhesive is first applied to a facestock in a wet state during label production, an adhesive having a higher solids content can advantageously dry at a lower temperature and/or shorter drying time than can an adhesive having a lower solids content. In certain embodiments, the total overall solids content of the adhesive ranges from 25 wt% to 70 wt%, e.g., from 25 wt% to 52 wt%, from 29.5 wt% to 56.5 wt%, from 34 wt% to 61 wt%, from 38.5 wt% to 65.5 wt%, or from 43 wt% to 70 wt%. In terms of upper limits, the adhesive solids content can be less than 70 wt%, e.g., less than 65.5 wt%, less than 61 wt%, less than 56.5 wt%, less than 52 wt%, less than 47.5 wt%, less than 43 wt%, less than 38.5 wt%, less than 34 wt%, or less than 29.5 wt%. In terms of lower limits, the adhesive solids content can be greater than 25 wt%, e.g., greater than 29.5 wt%, greater than 34 wt%, greater than 38.5 wt%, greater than 43 wt%, greater than 47.5 wt%, greater than 52 wt%, greater than 56.5 wt%, greater than 61 wt%, or greater than 65.5 wt%. Lower total overall solids contents, e.g., solids contents less than 25 wt%, and higher total overall solids contents, e.g., solids contents greater than 70 wt%, are also contemplated

The dynamic viscosity of the water-activated adhesive can be selected in certain cases for compatibility with downstream processes such as coating operations. Different coating techniques can be more suitable for use with adhesives having different viscosities, and the composition and resulting viscosity of the adhesive can thus be adjusted accordingly. In some embodiments, the overall dynamic viscosity of the adhesive ranges from 0.15 N·s/m² (150 cps) to 3.5 N·s/m² (3500 cps), e.g., from 0.15 N·s/m² (150 cps) to 1.0 N·s/m² (1000 cps), from 0.2 N·s/m² (200 cps) to 1.35 N·s/m² (1350 cps), from 0.275 N·s/m² (275 cps) to 1.875 N·s/m² (1875 cps), from 0.375 N·s/m² (375 cps) to 2.55 N·s/m² (2550 cps), or from 0.525 N·s/m² (525 cps) to 3.5 N·s/m² (3500 cps). In terms of upper limits, the adhesive viscosity can be less than 3.5 N·s/m² (3500 cps), e.g., less than 2.55 N·s/m² (2550 cps), less than 1.875 N·s/m² (1875 cps), less than 1.35 N·s/m² (1350 cps), less than 1.0 N·s/m² (1000 cps), less than 0.725 N·s/m² (725 cps), less than 0.525 N·s/m² (525 cps), less than 0.375 N·s/m² (375 cps), less the 0.275 N·s/m² (275 cps), or less than 0.2 N·s/m² (200 cps). In terms of lower limits, the adhesive viscosity can be greater than 0.15 N·s/m² (150 cps), e.g., greater than 0.1 N·s/m² (100 cps), greater than 0.2 N·s/m² (200 cps), greater than 0.275 N·s/m² (275 cps), greater than 0.375 N·s/m² (375 cps), greater than 0.525 N·s/m² (525 cps), greater than 0.725 N·s/m² (725 cps), greater than 1.35 N·s/m² (1350 cps), greater than 1.875 N·s/m² (1875 cps), or greater than 2.55 N·s/m² (2550 cps). Lower overall dynamic viscosities, e.g., viscosities less than 0.15 N·s/m² (150 cps), and higher overall dynamic viscosities, e.g., viscosities greater than 3.5 N·s/m² (3500 cps), are also contemplated.

### Labels

The label of the third aspect comprises a layer of facestock capable of receiving printed indicia, and a layer of water-activated adhesive having a composition according to the first aspect. The labels can also include one or more additional facestock layers, one or more additional adhesive layers, and one or more optional print layers. Preferably, the labels do not include a liner layer. The present subject matter can be utilized in labels free of print, but in many embodiments, the labels comprise one or more regions of print.

The facestock layer and adhesive layer can be positioned directly adjacent to one another or can have one or more additional layers in between them. Additional layers can include, for example, one or more coating layers, support layers, print layers, reflective layers, laminate layers, or others. Any one or more of the layers can also include two or more sublayers, each with different compositions, configurations, and functions.

In certain embodiments, the facestock comprises one or more papers, one or more polymers, one or more metals, one or more woods, or combinations thereof. The facestock can include, for example, paper facestock, cardboard facestock, plastic facestock, a multilayer laminated facestock including both paper and plastic layers, or any other materials that are commonly used in the industry. The multilayer laminate facestock can include a paper layer overlying a plastic layer. The plastic layer of the multilayer laminate facestock can be extruded or otherwise coated onto the paper layer. The paper layer can include, for example, high gloss paper, semi-gloss paper, lithographic paper, or electronic data processing (EDP) paper; and can be configured for use in, for example, multi-color printing, typewriter printing, or inkjet printing. The plastic layer can include, for example, polyesters, such as polyethylene terephthalate (PET); polyolefins, such as polypropylene (PP), ethylene-propylene copolymers, polyethylene (PE); and other materials. Other polymeric film materials include urethane based polymers such as polyether urethane and polyester urethane; amide based polymers including polyether polyamide copolymers; acrylic based polymers including a polyacrylate, and ethylene/vinyl acetate copolymer; polyester based polymers including a polyether polyester; a vinyl chloride; a vinylidene chloride; a polystyrene; a polyacrylonitrile; a polycarbonate; a polyimide; or the like. The facestock can include a flexible facestock. The facestock can include a transparent polymeric film. In certain applications, it can be useful to utilize "shrink" films or oriented films as a facestock layer. The present subject matter includes, for example, biaxially oriented films such as PET as a facestock layer.

In some embodiments, the label further includes print disposed on the layer of facestock. The print can include layers or regions of ink, dyes, pigments, or like materials. As will be understood, "dye" and like terms mean a visible light absorbing compound present in a molecularly dispersed or dissolved form. "Pigment" and like terms mean a visible light absorbing material or compound that is present in a non-molecularly dispersed or particulate form. "Ink" and like terms means a coatable or printable formulation containing a dye and/or pigment. Although the present subject matter is largely directed toward labels including visually perceptible print, it is contemplated that the labels may include print that is exclusively or primarily indicative under UV light or other conditions.

The adhesive layer can be applied directly adjacent to, and in contact with, the facestock. There can be intervening layers between the adhesive layer and the facestock. The label can include two or more layers of adhesive and/or facestock. The adhesive layer of the label can be coated onto the facestock with a coat weight of, for example, from 5 gsm to 20 gsm, e.g., from 5 gsm to 14 gsm, from 6.5 gsm to 15.5 gsm, from 8 gsm to 17 gsm, from 9.5 gsm to 18.5 gsm, or from 11 gsm to 20 gsm. In terms of upper limits, the adhesive layer of the label can have a coat weight that is less than 20 gsm, e.g., less than 18.5 gsm, less than 17 gsm, less than 15.5 gsm, less than 14 gsm, less than 12.5 gsm, less than 11 gsm, less than 9.5 gsm, less than 8 gsm, or less than 6.5 gsm. In terms of lower limits, the adhesive layer of the label can have a coat weight that is greater than 5 gsm, e.g., greater than 6.5 gsm, greater than 8 gsm, greater than 9.5 gsm, greater than 11 gsm, greater than 12.5 gsm, greater than 14 gsm, greater than 15.5 gsm, greater than 17 gsm, or greater than 18.5 gsm. Lower adhesive layer coat weights, e.g., coat weights less than 5 gsm, and higher adhesive layer coat weights, e.g., coat weights greater than 20 gsm, are also contemplated.

The present subject matter can include the incorporation of one or more clear or transparent layers in any of the label constructions described herein. The present subject matter can also include the incorporation of one or more metallic layers or metal foils in any of the label constructions described herein. It is also contemplated that the label constructions can also include combinations of one or more transparent layers and one or more metallic layers. In some embodiments, the label is a clear on clear label having a laminate composition that includes a transparent biaxially oriented polypropylene (BOPP) film, and a transparent pressure sensitive adhesive layer.

In certain embodiments, the labels using the adhesive of the present disclosure demonstrate advantageous wash-off times when affixed to glass surfaces, such as an exterior surface of a bottle. As used herein, "wash-of times" refer to minimum times required for a label and its adhesive to be substantially completely removed from a surface, e.g., the surface of a glass bottle, to which the label has been adhered. As such, wash-off times indicate the ability of an adhesive to be effectively removed from the respective substrate. For example, a label comprising a 70 gsm to 80 gsm semi-gloss paper facestock layer, and a 10 gsm adhesive layer of the water-activated adhesive, can have a wash-off time when removed with 60 °C water having substantially no caustic of less than 5 minutes, e.g., less than 4 minutes, less than 3 minutes, less than 2 minute, or less than 1 minute.

In some embodiments, a wash-off time of 3 minutes or less is realized with an adhesive having an aqueous vinyl acetate emulsion concentration ranging from 25 wt% to 65 wt%, a concentration of vinyl acetate in the aqueous emulsion ranging from 4 wt% to 59 wt%, and a concentration of polyvinyl alcohol ranging from 25 wt% to 45 wt%. In some embodiments, a wash-off time of 3 minutes or less is realized with an adhesive having an aqueous vinyl acetate emulsion concentration ranging from 25 wt% to 65 wt%, a concentration of vinyl acetate in the aqueous emulsion ranging from 4 wt% to 59 wt%, and a concentration of glycerin ranging from 3 wt% to 10 wt%. In some embodiments, a wash-off time of 3 minutes or less is realized with an adhesive having an aqueous vinyl acetate emulsion concentration ranging from 25 wt% to 65 wt%, a concentration of vinyl acetate in the aqueous emulsion ranging from 4 wt% to 59 wt%, and a weight ratio of the aqueous emulsion to polyvinyl alcohol ranging from 0.6 to 2.3 In some embodiments, a wash-off time of 3 minutes or less is realized with an adhesive having an aqueous vinyl acetate emulsion concentration ranging from 25 wt% to 65 wt%, a concentration of vinyl acetate in the aqueous emulsion ranging from 4 wt% to 59 wt%, and a weight ratio of the aqueous emulsion to glycerin ranging from 4 to 10. In some embodiments, a wash-off time of 3 minutes or less is realized with an adhesive having an aqueous vinyl acetate emulsion concentration ranging from 25 wt% to 65 wt%, a concentration of vinyl acetate in the aqueous emulsion ranging from 4 wt% to 59 wt%, and a weight ratio of polyvinyl alcohol to glycerin ranging from 2.5 to 7.5.

### Methods of Producing Adhesive

The method for producing a water-activated adhesive of the second aspect comprises providing a polyvinyl alcohol, glycerin, and an aqueous emulsion of vinyl acetate; and combining the polyvinyl alcohol, glycerin, and aqueous emulsion to produce the water-activated adhesive, wherein the concentration of polyvinyl alcohol in the water-activated adhesive ranges from 25 wt% to 45 wt%. The ingredients can be mixed, for example under vigorous stirring with an overhead stirrer, to ensure their proper blending. The concentrations of the polyvinyl alcohol, glycerin, and aqueous emulsion in the produced water-activated adhesive can each independently be as described above. In some embodiments, the produced water-activated adhesive includes from 25 wt% to 65 wt% the aqueous emulsion of vinyl acetate, from 25 wt% to 45 wt % polyvinyl alcohol, and from 3 wt% to 10 wt% glycerin.

The method for producing the water-activated adhesive can further include providing polyethylene glycol, and the combining operation of the method can further include adding the polyethylene glycol to the polyvinyl alcohol, glycerin, and aqueous emulsion to produce the water-activated adhesive. The molecular weight and concentration of the polyethylene glycol in the produced water-activated adhesive can be as described above.

The method for producing the water-activated adhesive can further include providing one or more additives, and the combining operation of the method can further include adding the one or more additives to the polyvinyl alcohol, glycerin, and aqueous emulsion to produce the water-activated adhesive. The additives can include one or more fillers, one or more pigments, one or more foam control agents, one or more wetting reagents, or combinations thereof.

The method for producing the water-activated adhesive can further include providing polyethyleneimine, and the combining operation of the method can further include adding the polyethyleneimine to the polyvinyl alcohol, glycerin, and aqueous emulsion to produce the water-activated adhesive. The concentration of the polyethyleneimine in the produced water-activated adhesive can be as described above.

The method for producing the water-activated adhesive can further include providing rosin ester, and the combining operation of the method can further include adding the rosin ester to the polyvinyl alcohol, glycerin, and aqueous emulsion to produce the water-activated adhesive. The concentration of the rosin ester in the produced water-activated adhesive can be as described above.

The method for producing the water-activated adhesive can further include providing poly(2-ethyl-2-oxazoline), and the combining operation of the method can further include adding the poly(2-ethyl-2-oxazoline) to the polyvinyl alcohol, glycerin, and aqueous emulsion to produce the water-activated adhesive. The concentration of the poly(2-ethyl-2-oxazoline) in the produced water-activated adhesive can be as described above.

The method for producing the water-activated adhesive can further include providing clay, and the combining operation of the method can further include adding the clay to the polyvinyl alcohol, glycerin, and aqueous emulsion to produce the water-activated adhesive. The concentration of the clay in the produced water-activated adhesive can be as described above.

### Methods of Making Labels

Also provided are methods of making a label. The methods can include producing a water-activated adhesive using any of the methods as described above. The methods can further include coating the water-activated adhesive on a facestock capable of receiving printed indicia. The facestock of the label can be as described above. The coating operation can include, for example, slot die coating or curtain die coating. The adhesive can also be coated onto a facestock using techniques such as spraying, wire coating, knife coating, Meyer Bar coating, extrusion coating, gravure print coating, or other coating process known to one of skill in the art.

The coating generates an adhesive layer having, for example, a coat weight from 5 gsm to 20 gsm, e.g., from 5 gsm to 14 gsm, from 6.5 gsm to 15.5 gsm, from 8 gsm to 17 gsm, from 9.5 gsm to 18.5 gsm, or from 11 gsm to 20 gsm. In terms of upper limits, the adhesive layer coat weight can be less than 20 gsm, e.g., less than 18.5 gsm, less than 17 gsm, less than 15.5 gsm, less than 14 gsm, less than 12.5 gsm, less than 11 gsm, less than 9.5 gsm, less than 8 gsm, or less than 6.5 gsm. In terms of lower limits, the adhesive layer coat weight can be greater than 5 gsm, e.g., greater than 6.5 gsm, greater than 8 gsm, greater than 9.5 gsm, greater than 11 gsm, greater than 12.5 gsm, greater than 14 gsm, greater than 15.5 gsm, greater than 17 gsm, or greater than 18.5 gsm. Lower adhesive layer coat weights, e.g., coat weights less than 5 gsm, and higher coat weights, e.g., coat weights greater than 20 gsm, are also contemplated.

The method of making a label can further include curing the coated facestock. The curing can, for example, be at a temperature from 70 °C to 130 °C, e.g., from 70 °C to 106 °C, from 76 °C to 112 °C, from 82 °C to 118 °C, from 88 °C to 124 °C, or from 94 °C to 130 °C. In terms of upper limits, the curing temperature can be less than 130 °C, e.g., less than 124 °C, less than 118 °C, less than 112 °C. less than 106 °C, less than 100 °C, less than 94 °C, less than 88 °C, less than 82 °C, or less than 76 °C. In terms of lower limits, the curing temperature can be greater than 70 °C, e.g., greater than 76 °C, greater than 82 °C, greater than 88 °C, greater than 94 °C, greater than 100 °C, greater than 106 °C, greater than 112 °C, greater than 118 °C, or greater than 124 °C. Lower curing temperatures, e.g., temperatures less than 70 °C, and higher curing temperatures, e.g., temperatures greater than 130 °C, are also contemplated. The curing operation of the method can be carried out for an amount of time sufficient to reduce the moisture content of the coated facestock to less than 10%, e.g., less than 9%, less than 8%, less than 7%, less than 6%, less than 5%, less than 4%, less than 3%, less than 2%, or less than 1%.

The method of making a label can further include cutting the coated facestock. The cutting operation can be carried out with, for example, any type of die cutter familiar to one of skill in the art.

### Methods of Applying a Label to a Surface

Also provided are methods of applying a label to a surface. The methods can include providing a surface having an outer face. The surface can include, for example, one or more papers, one or more polymers, one or more metals, glass, one or more woods, or combinations thereof. The methods can further include providing a label as described above. The methods can further include activating the label by contacting the label with an activation liquid. In some embodiments, the activation liquid includes water. In come embodiments, the activation liquid consists of water. In some embodiments, the activation liquid consists essentially of water. In some embodiments, the activation comprises water and does not comprise an organic solvent. In some embodiments, the activation liquid further comprises an organic solvent. The organic solvent can, for example, be an alcohol. In some embodiments, the activation liquid includes a mixture of water and isopropyl alcohol. The methods can further include adhering the activated label to the outer face of the surface, thereby applying the label to the surface.

The applied label can, for example, be repositionable after the adhering for at least 5 minutes, e.g., at least 4 minutes, at least 3 minutes, at least 2 minutes, at least 1 minute, at least 50 seconds, at least 40 seconds, at least 30 seconds, at least 20 seconds, or at least 10 seconds. The applied label can, for example, bond to the outer face of the surface after less than 10 hours, e.g., less than 8 hours, less than 6 hours, less than 4 hours, less than 2 hours, less than 1 hour, less than 50 minutes, less than 40 minutes, less than 30 minutes, less than 20 minutes, less than 10 minutes, less than 8 minutes, less than 6 minutes, less than 4 minutes, or less than 2 minutes.

### Systems

Also provided are systems for producing labeled articles. The systems can include a web of label stock. The label stock web can include a facestock capable of receiving printed indicia, and an adhesive layer that includes a water-activated adhesive. The facestock, adhesive layer, and water-activated adhesive can each be as described above.

The system can further include a cutting station for forming a plurality of cut labels from the web of label stock. The cutting station can include a label cutter that can be modified for label size adjustment. The system can further include an activation station for activating the cut labels. In some embodiments, the activation station includes a roller. At least a portion of the roller can be covered by a sponge for carrying an activation liquid to the labels. In some embodiments, the activation station includes a reservoir. The reservoir can include an activation liquid. The activation liquid can include water. In some embodiments, the activation liquid does not comprise an organic solvent. In some embodiments, the activation liquid is transferred from the reservoir to the labels via the roller sponge.

The system can further include a plurality of articles to be labeled. The articles can include, for example, bottles, cans, containers, vessels, bags, pouches, envelopes, parcels, or boxes. The system can further include a conveyer for moving the articles. The conveyor can be, for example, a conveyor belt. The system can further include a label carrier for moving the cut labels. In some embodiments, the label carrier includes a vacuum that can be an element of a vacuum-assisted diaphragm and/or head. The cut labels can be presented to the label carrier in the form of a stack of precut activable labels. The system can further include one or more synchronized actuators responsible for moving or controlling the system by using either electric voltage or current, pneumatic pressure, hydraulic pressure, or other means.

FIG. 1 illustrates one example of a provided system. Shown in the figure is a web stock of labels in the form of a roll. The label web is unwound and fed to a printer station for receiving printed indicia, and then a cutting station for forming cut labels. A label carrier that includes a vacuum transfers the cut labels from the cutting station to an activation station. At the activation station, a roller applies an activation liquid to the cut labels to activate them. The label carrier then transfers the activated labels from the activation station to a surface of an article that is being conveyed through the system on a conveyor belt. A press roller is then used to ensure adequate surface contact between the activated adhesive and the article to be labeled.

The present disclosure will be better understood in view of the following non-limiting examples.

### Examples

Seven water-activated adhesive compositions were prepared according to the formulations listed below in Table 1. The vinyl acetate emulsion of the formulations included 55 wt% vinyl acetate in water. In each case, the ingredients were mixed at 1500 rpm with an overhead stirrer to blend.

**Table 1. Water-Activated Adhesive Formulations**

| | Ex. 1 (%) | Ex. 2 (%) | Ex. 3 (%) | Ex. 4 (%) | Ex. 5 (%) | Ex. 6 (%) | Ex. 7 (%) |
|---|---|---|---|---|---|---|---|
| Vinyl acetate emulsion | 51.5 | 51.5 | 48 | 45 | 41 | 51.5 | 40 |
| Polyvinyl alcohol | 35.79 | 32.12 | 35.79 | 34.12 | 35.79 | 30.12 | 32.12 |
| Glycerin | 6.5 | 6.4 | 6.5 | 6 | 6.5 | 6.5 | 5.5 |
| Foam control agent | 0.5 | 0.5 | 0.8 | 0.5 | 0.5 | 0.5 | 0.5 |
| Polyethyleneimine | 1 | 1 | 2 | 1 | 1 | 1 | 1 |
| Interfacial tension modifier | 1 | 1 | 1 | 1 | 0.5 | 0.5 | 0.5 |
| Poly(2-ethyl-2-oxazoline) | -- | 3 | -- | 3 | -- | 5 | 10 |
| Kaolin clay | 3 | 3 | 5 | 9 | 10 | 5 | 10 |
| Rosin ester | 1 | -- | -- | -- | -- | -- | -- |

The adhesives were each coated directly onto printable facestock and cured at a temperature above the boiling point of water to obtain dry coat weights ranging from 10-15 gsm. Labels were then cut from the coated printable facestock. The labels were activated with various activating liquids, as shown in Table 2 below. The activation liquids included water and optionally isopropyl alcohol (IPA). The labels were then applied to various substrates and tested for activation kinetics, curing and setting conditions, and adhesion performance.

The labels were assessed for fiber tear after dwell times ranging from 30 seconds to 300 seconds. As used herein, the term "fiber tear" refers to a degree to which fibers from the facestock remain on the adhesive layer after attempting to peel the label from the surface of the substrate. In this way, high fiber tear indicates that the bond between the adhesive and the substrate is greater than internal bonds or strength in the facestock. As used herein, the term "dwell time" refers to the time period during which an activated label is in contacted with a substrate. As such, dwell times do not include times required for activation of the label, or for application of the label to the substrate. Results from these evaluations are listed below in Table 2. These fiber tear results, which were the same or similar for each of the example adhesive formulations of Table 1, demonstrate that the provided water-activated adhesives were capable of bonding strongly to each of the tested substrate materials.

**Table 2. Water-Activated Adhesive Activation Performance on Different Substrates**

| Substrate | Adhesive coat weight (gsm) | Adhesive cure time (min) | Activation liquid | | |
|---|---|---|---|---|---|
| | | | 100% water | 50% IPA + 50% water | 70% IPA + 30% water |
| HDPE | 10 | 2 | 100% fiber tear | 100% fiber tear | 100% fiber tear |
| Stainless steel | 10 | 2 | 100% fiber tear | 100% fiber tear | 100% fiber tear |
| Virgin kraft board | 10 | 2 | 100% fiber tear | 100% fiber tear | 100% fiber tear |
| Glass | 10 | 2 | 100% fiber tear | 100% fiber tear | 100% fiber tear |
| Paper | 10 | 2 | 100% fiber tear | 100% fiber tear | 100% fiber tear |

In another experiment, the adhesives of Examples 1 - 7 were each coated onto different types of facestock at different coat weights to test adhesion performance. The results, shown below in Tables 3 and 4, demonstrate the compatibility of the provided water-activated adhesive with different facestock types while maintaining excellent adhesion bond strength - the examples demonstrated 100% fiber tear on all facestocks.

**Table 3. Water-Activated Adhesive Performance With Different Facestock Types**

| Adhesive | Coat Weight (gsm) | Facestock | | | | |
|---|---|---|---|---|---|---|
| | | Moorim C1S 80 gsm | Nippon C2S 80 gsm | Niklakette 70 gsm wet strength paper | Searac 70 gsm wet strength paper | Nippon FSC 70 gsm paper |
| Ex. 1 | 10 | 100% fiber tear | 100% fiber tear | 100% fiber tear | 100% fiber tear | 100% fiber tear |
| Ex. 2 | 10 | 100% fiber tear | 100% fiber tear | 100% fiber tear | 100% fiber tear | 100% fiber tear |
| Ex. 3 | 10 | 100% fiber tear | 100% fiber tear | 100% fiber tear | 100% fiber tear | 100% fiber tear |
| Ex. 4 | 10 | 100% fiber tear | 100% fiber tear | 100% fiber tear | 100% fiber tear | 100% fiber tear |
| Ex. 5 | 10 | 100% fiber tear | 100% fiber tear | 100% fiber tear | 100% fiber tear | 100% fiber tear |
| Ex. 6 | 10 | 100% fiber tear | 100% fiber tear | 100% fiber tear | 100% fiber tear | 100% fiber tear |
| Ex. 7 | 10 | 100% fiber tear | 100% fiber tear | 100% fiber tear | 100% fiber tear | 100% fiber tear |

**Table 4. Water-Activated Adhesive Performance With Different Facestock Types**

| Adhesive | Coat Weight (gsm) | Facestock | | | | |
|---|---|---|---|---|---|---|
| | | Moorim C1S 80 gsm | Nippon C2S 80 gsm | Niklakette 70 gsm wet strength paper | Searac 70 gsm wet strength paper | Nippon FSC 70 gsm paper |
| Ex. 1 | 15 | 100% fiber tear | 100% fiber tear | 100% fiber tear | 100% fiber tear | 100% fiber tear |
| Ex. 2 | 15 | 100% fiber tear | 100% fiber tear | 100% fiber tear | 100% fiber tear | 100% fiber tear |
| Ex. 3 | 15 | 100% fiber tear | 100% fiber tear | 100% fiber tear | 100% fiber tear | 100% fiber tear |
| Ex. 4 | 15 | 100% fiber tear | 100% fiber tear | 100% fiber tear | 100% fiber tear | 100% fiber tear |
| Ex. 5 | 15 | 100% fiber tear | 100% fiber tear | 100% fiber tear | 100% fiber tear | 100% fiber tear |
| Ex. 6 | 15 | 100% fiber tear | 100% fiber tear | 100% fiber tear | 100% fiber tear | 100% fiber tear |
| Ex. 7 | 15 | 100% fiber tear | 100% fiber tear | 100% fiber tear | 100% fiber tear | 100% fiber tear |

The adhesives of Examples 1 - 7 were also evaluated for suitability in adhering labels to glass bottles. This type of label application typically involves wet glues, rather than activable adhesives. The provided adhesive was coated directly onto two different facestock types (wet strength paper and semi-gloss paper) using two different coat weights (10 gsm and 12 gsm). The coated facestocks were then die cut to produce labels which were activated and applied to the outside of standard glass bottles. The bottles were aged for 7 days under one of four sets of conditions (room temperature, a 50 °C dry oven, 40 °C with 90% relative humidity, and -20 °C). After this week of storage, the wash-off performance of the labels was tested using heated solutions having different temperatures and caustic amounts. The results of the evaluation are shown in Table 5 below.

**Table 5. Water-Activated Adhesive as Wash-Off Bottle Label**

| Facestock | Coat weight (gsm) | Wash Conditions | | Wash-Off Times (sec.) at Various Storage Conditions | | | |
|---|---|---|---|---|---|---|---|
| | | Temp. (°C) | Caustic (%) | Room Temp. | 50 °C Dry Oven | 40 °C at 90% R.H. | -20 °C |
| Wet Strength 70 gsm | 12 | 80 | 2.5 | 71 | 72 | 85 | -- |
| | 12 | 80 | 1.8 | 87 | 93 | 107 | -- |
| | 10 | 60 | 0 | 207 | 224 | 289 | -- |
| Semi-gloss 73 gsm | 10 | 80 | 1.8 | 78 | 107 | 128 | -- |
| | 10 | 60 | 0 | 152 | 221 | 235 | 118 |

From the data in Table 5, it can be seen that the wash off time for the produced labels varied from 1 minute to 5 minute depending on the face stock, adhesive coat weight, wash temperature, wash caustic concentration, and ageing conditions. Importantly, labels using generally less expensive semi-gloss facestock were as easily removed as labels using the more conventional, and generally more expensive, wet strength facestock. The tensile strength and elongation of the adhesive-coated semi-gloss paper labels was measured and compared with uncoated semi-gloss paper. Tensile strength measurements indicated that the provided water-activated adhesive increases the overall paper strength of the semi-gloss facestock, which can help in the wash-off process. These finding demonstrate that the provided adhesive formulations can offer greater flexibility and improved economics over conventional label configurations and applications.

## Claims

1. A water-activated adhesive comprising:
an aqueous emulsion of vinyl acetate;
polyvinyl alcohol; and
glycerin,
wherein the concentration of polyvinyl alcohol in the water-activated adhesive ranges from 25 wt% to 45 wt%.

2. The water-activated adhesive of claim 1, wherein any one or more of the following numbered statements (A) to (C) applies:
(A) the concentration of the aqueous emulsion in the water-activated adhesive ranges from 25 wt% to 65 wt%;
(B) the concentration of vinyl acetate in the aqueous emulsion ranges from 4 wt% to 59 wt%;
(C) the concentration of glycerin in the water-activated adhesive ranges from 3 wt% to 10 wt%.

3. The water-activated adhesive of claim 1 or 2, wherein any one or more of the following numbered statements (A) to (C) applies:
(A) the weight ratio of the aqueous emulsion to the polyvinyl alcohol in the water-activated adhesive ranges from 0.6 to 2.3;
(B) the weight ratio of the aqueous emulsion to the glycerin in the water-activated adhesive ranges from 4 to 10;
(C) the weight ratio of the polyvinyl alcohol to the glycerin in the water-activated adhesive ranges from 2.5 to 7.5.

4. The water-activated adhesive of claim 1, 2 or 3, further comprising polyethylene glycol,
optionally wherein the concentration of polyethylene glycol in the water-activated adhesive ranges from 3 wt% to 10 wt%.

5. The water-activated adhesive of any one of claims 1-4, further comprising:
one or more additives selected from the group consisting of one or more fillers, one or more pigments, one or more foam control agents, and one or more wetting agents.

6. The water-activated adhesive of any one of claims 1-5, wherein any one or more of the following numbered statements (A) to (D) applies:
(A) the water-activated adhesive further comprises polyethyleneimine, optionally wherein the concentration of polyethyleneimine in the water-activated adhesive is less than 5 wt%;
(B) the water-activated adhesive further comprises a rosin ester, optionally wherein the concentration of the rosin ester in the water-activated adhesive ranges from 1 wt% to 5 wt%;
(C) the water-activated adhesive further comprises poly(2-ethyl-2-oxazoline), optionally wherein the concentration of poly(2-ethyl-2-oxazoline) in the water-activated adhesive is less than 20 wt%;
(D) the water-activated adhesive further comprises clay, optionally wherein the concentration of clay in the water-activated adhesive is less than 10 wt%.

7. The water-activated adhesive of any one of claims 1-6, wherein the water-activated adhesive has a solids content ranging from 25 wt% to 70 wt%.

8. A label comprising:
a facestock layer capable of receiving printed indicia; and
an adhesive layer comprising the water-activated adhesive of any of claims 1-7.

9. The label of claim 8, wherein the adhesive layer has a coat weight ranging from 5 gsm to 20 gsm.

10. The label of claim 8 or 9, wherein the label does not comprise a liner.

11. The label of any one of claims 8-10, wherein the facestock layer comprises one or more materials selected from the group consisting of one or more papers, one or more polymers, one or more metals, or one or more woods.

12. A method for producing a water-activated adhesive, the method comprising:
providing polyvinyl alcohol, glycerin, and an aqueous emulsion of vinyl acetate; and
combining the polyvinyl alcohol, the glycerin, and the aqueous emulsion to produce the water-activated adhesive,
wherein the concentration of polyvinyl alcohol in the water-activated adhesive ranges from 25 wt% to 45 wt%.

13. The method of claim 12, wherein the water-activated adhesive comprises:
25 wt% to 65 wt% aqueous emulsion of vinyl acetate;
25 wt% to 45 wt% polyvinyl alcohol; and
3 wt% to 10 wt% glycerin.

14. The method of claim 12 or 13, wherein either one or both of the following numbered statements (A) and (B) applies:
(A) the method further comprises:
providing polyethylene glycol; and
wherein the combining further comprises adding the polyethylene glycol to the polyvinyl alcohol, the glycerin, and the aqueous emulsion to produce the water-activated adhesive;
(B) the method further comprises:
providing one or more additives selected from the group consisting of one or more fillers, one or more pigments, one or more foam control agents, and one or more wetting agents; and
wherein the combining further comprises adding the one or more additives to the polyvinyl alcohol, the glycerin, and the aqueous emulsion to produce the water-activated adhesive.

15. The method of any one of claims 12-14, wherein any one or more of the following numbered statements (A) to (D) applies:
(A) the method further comprises:
providing polyethyleneimine; and
wherein the combining further comprises adding the polyethyleneimine to the polyvinyl alcohol, the glycerin, and the aqueous emulsion to produce the water-activated adhesive;
(B) the method further comprises:
providing a rosin ester; and
wherein the combining further comprises adding the rosin ester to the polyvinyl alcohol, the glycerin, and the aqueous emulsion to produce the water-activated adhesive;
(C) the method further comprises:
providing poly(2-ethyl-2-oxazoline); and
wherein the combining further comprises adding the poly(2-ethyl-2-oxazoline) to the polyvinyl alcohol, the glycerin, and the aqueous emulsion to produce the water-activated adhesive;
(D) the method further comprises:
providing clay; and
wherein the combining further comprises adding the clay to the polyvinyl alcohol, the glycerin, and the aqueous emulsion to produce the water-activated adhesive.

## Patentansprüche

1. Wasseraktivierter Klebstoff, umfassend:
eine wässrige Emulsion von Vinylacetat;
Polyvinylalkohol; und
Glycerin,
wobei die Konzentration von Polyvinylalkohol in dem wasseraktivierten Klebstoff von 25 Gew.-% bis 45 Gew.-% reicht.

2. Wasseraktivierter Klebstoff nach Anspruch 1, wobei eine oder mehrere der folgenden nummerierten Aussagen (A) bis (C) zutreffen:
(A) die Konzentration der wässrigen Emulsion in dem wasseraktivierten Klebstoff reicht von 25 Gew.-% bis 65 Gew.-%;
(B) die Konzentration von Vinylacetat in der wässrigen Emulsion reicht von 4 Gew.-% bis 59 Gew.-%;
(C) die Konzentration von Glycerin in dem wasseraktivierten Klebstoff reicht von 3 Gew.-% bis 10 Gew.-%.

3. Wasseraktivierter Klebstoff nach Anspruch 1 oder 2, wobei eine oder mehrere der folgenden nummerierten Aussagen (A) bis (C) zutreffen:
(A) das Gewichtsverhältnis der wässrigen Emulsion zum Polyvinylalkohol in dem wasseraktivierten Klebstoff reicht von 0,6 bis 2,3;
(B) das Gewichtsverhältnis der wässrigen Emulsion zum Glycerin in dem wasseraktivierten Klebstoff reicht von 4 bis 10;
(C) das Gewichtsverhältnis des Polyvinylalkohols zum Glycerin in dem wasseraktivierten Klebstoff reicht von 2,5 bis 7,5.

4. Wasseraktivierter Klebstoff nach Anspruch 1, 2 oder 3, ferner Polyethylenglykol umfassend,
wobei die Konzentration von Polyethylenglykol in dem wasseraktivierten Klebstoff optional von 3 Gew.-% bis 10 Gew.-% reicht.

5. Wasseraktivierter Klebstoff nach einem der Ansprüche 1-4, ferner umfassend:
ein oder mehrere Additive, die aus der Gruppe ausgewählt sind, die aus einem oder mehreren Füllstoffen, einem oder mehreren Pigmenten, einem oder mehreren Schaumregulierungsmitteln und einem oder mehreren Netzmitteln besteht.

6. Wasseraktivierter Klebstoff nach einem der Ansprüche 1-5, wobei eine oder mehrere der folgenden nummerierten Aussagen (A) bis (D) zutreffen:
(A) der wasseraktivierte Klebstoff umfasst ferner Polyethylenimin, wobei die Konzentration von Polyethylenimin in dem wasseraktivierten Klebstoff optional weniger als 5 Gew.-% beträgt;
(B) der wasseraktivierte Klebstoff umfasst ferner einen Harzester, wobei die Konzentration des Harzesters in dem wasseraktivierten Klebstoff optional von 1 Gew.-% bis 5 Gew.-% reicht;
(C) der wasseraktivierte Klebstoff umfasst ferner Poly(2-ethyl-2-oxazolin), wobei die Konzentration von Poly(2-ethyl-2-oxazolin) in dem wasseraktivierten Klebstoff optional weniger als 20 Gew.-% beträgt;
(D) der wasseraktivierte Klebstoff umfasst ferner Ton, wobei die Tonkonzentration in dem wasseraktivierten Klebstoff optional weniger als 10 Gew.-% beträgt.

7. Wasseraktivierter Klebstoff nach einem der Ansprüche 1-6, wobei der wasseraktivierte Klebstoff einen Feststoffgehalt aufweist, der von 25 Gew.-% bis 70 Gew.-% reicht.

8. Etikett, umfassend:
eine Decklagenschicht, die in der Lage ist, gedruckte Zeichen aufzunehmen; und
eine Klebstoffschicht, die den wasseraktivierten Klebstoff nach einem der Ansprüche 1-7 umfasst.

9. Etikett nach Anspruch 8, wobei die Klebstoffschicht ein Auftragsgewicht aufweist, das von 5 g/m² bis 20 g/m² reicht.

10. Etikett nach Anspruch 8 oder 9, wobei das Etikett kein Trägerpapier umfasst.

11. Etikett nach einem der Ansprüche 8-10, wobei die Decklagenschicht ein oder mehrere Materialien umfasst, die aus der Gruppe ausgewählt sind, die aus einem oder mehreren Papieren, einem oder mehreren Polymeren, einem oder mehreren Metallen oder einem oder mehreren Hölzern besteht.

12. Verfahren zum Herstellen eines wasseraktivierten Klebstoffs, wobei das Verfahren Folgendes umfasst:
Bereitstellen von Polyvinylalkohol, Glycerin und einer wässrigen Emulsion von Vinylacetat; und
Kombinieren des Polyvinylalkohols, des Glycerins und der wässrigen Emulsion, um den wasseraktivierten Klebstoff herzustellen,
wobei die Konzentration von Polyvinylalkohol in dem wasseraktivierten Klebstoff von 25 Gew.-% bis 45 Gew.-% reicht.

13. Verfahren nach Anspruch 12, wobei der wasseraktivierte Klebstoff Folgendes umfasst:
25 Gew.-% bis 65 Gew.-% wässrige Emulsion von Vinylacetat;
25 Gew.-% bis 45 Gew.-% Polyvinylalkohol; und
3 Gew.-% bis 10 Gew.-% Glycerin.

14. Verfahren nach Anspruch 12 oder 13, wobei eine oder beide der folgenden nummerierten Aussagen (A) und (B) zutreffen:
(A) das Verfahren umfasst ferner Folgendes:
Bereitstellen von Polyethylenglykol; und
wobei das Kombinieren ferner Hinzufügen des Polyethylenglykols zu dem Polyvinylalkohol, dem Glycerin und der wässrigen Emulsion umfasst, um den wasseraktivierten Klebstoff herzustellen;
(B) das Verfahren umfasst ferner Folgendes:
Bereitstellen eines oder mehrerer Additive, die aus der Gruppe ausgewählt sind, die aus einem oder mehreren Füllstoffen, einem oder mehreren Pigmenten, einem oder mehreren Schaumregulierungsmitteln und einem oder mehreren Netzmitteln besteht; und
wobei das Kombinieren ferner Hinzufügen des einen oder der mehreren Additive zu dem Polyvinylalkohol, dem Glycerin und der wässrigen Emulsion umfasst, um den wasseraktivierten Klebstoff herzustellen.

15. Verfahren nach einem der Ansprüche 12-14, wobei eine oder mehrere der folgenden nummerierten Aussagen (A) bis (D) zutreffen:
(A) das Verfahren umfasst ferner Folgendes:
Bereitstellen von Polyethylenimin; und
wobei das Kombinieren ferner Hinzufügen des Polyethylenimins zu dem Polyvinylalkohol, dem Glycerin und der wässrigen Emulsion umfasst, um den wasseraktivierten Klebstoff herzustellen;
(B) das Verfahren umfasst ferner Folgendes:
Bereitstellen eines Harzesters; und
wobei das Kombinieren ferner Hinzufügen des Harzesters zu dem Polyvinylalkohol, dem Glycerin und der wässrigen Emulsion umfasst, um den wasseraktivierten Klebstoff herzustellen;
(C) das Verfahren umfasst ferner Folgendes:
Bereitstellen von Poly(2-ethyl-2-oxazolin); und
wobei das Kombinieren ferner Hinzufügen des Poly(2-ethyl-2-oxazolins) zu dem Polyvinylalkohol, dem Glycerin und der wässrigen Emulsion umfasst, um den wasseraktivierten Klebstoff herzustellen;
(D) das Verfahren umfasst ferner Folgendes:
Bereitstellen von Ton; und
wobei das Kombinieren ferner Hinzufügen des Tons zu dem Polyvinylalkohol, dem Glycerin und der wässrigen Emulsion umfasst, um den wasseraktivierten Klebstoff herzustellen.

## Revendications

1. Adhésif activé par l'eau comprenant :
une émulsion aqueuse d'acétate de vinyle ;
de l'alcool polyvinylique ; et
de la glycérine,
la concentration d'alcool polyvinylique dans l'adhésif activé par l'eau allant de 25% en poids à 45 % en poids.

2. Adhésif activé par l'eau selon la revendication 1, l'une quelconque ou plusieurs des affirmations numérotées (A) à (C) suivantes s'appliquant :
(A) la concentration de l'émulsion aqueuse dans l'adhésif activé par l'eau allant de 25 % en poids à 65 % en poids ;
(B) la concentration de l'acétate de vinyle dans l'émulsion aqueuse allant de 4 % en poids à 59 % en poids ;
(C) la concentration de la glycérine dans l'adhésif activé par l'eau allant de 3 % en poids à 10 % en poids.

3. Adhésif activé par l'eau selon la revendication 1 ou 2, l'une quelconque ou plusieurs des affirmations numérotées (A) à (C) suivantes s'appliquant :
(A) le rapport massique de l'émulsion aqueuse à l'alcool polyvinylique dans l'adhésif activé par l'eau allant de 0,6 à 2,3 ;
(B) le rapport massique de l'émulsion aqueuse à la glycérine dans l'adhésif activé par l'eau allant de 4 à 10 ;
(C) le rapport massique de l'alcool polyvinylique à la glycérine dans l'adhésif activé par l'eau allant de 2,5 à 7,5.

4. Adhésif activé par l'eau selon la revendication 1, 2 ou 3, comprenant en outre du polyéthylène glycol,
éventuellement ladite concentration de polyéthylène glycol dans l'adhésif activé par l'eau allant de 3 % en poids à 10 % en poids.

5. Adhésif activé par l'eau selon l'une quelconque des revendications 1 à 4, comprenant en outre :
un ou plusieurs additifs choisis dans le groupe constitué par une ou plusieurs charges, un ou plusieurs pigments, un ou plusieurs agents antimousses, et un ou plusieurs agents mouillants.

6. Adhésif activé par l'eau selon l'une quelconque des revendications 1 à 5, l'une quelconque ou plusieurs des affirmations numérotées (A) à (D) suivantes s'appliquant :
(A) l'adhésif activé par l'eau comprend en outre de la polyéthylèneimine, éventuellement la concentration de polyéthylèneimine dans l'adhésif activé par l'eau étant inférieure à 5 % en poids ;
(B) l'adhésif activé par l'eau comprend en outre un ester de rosine, éventuellement la concentration d'ester de rosine dans l'adhésif activé par l'eau allant de 1 % en poids à 5 % en poids ;
(C) l'adhésif activé par l'eau comprend en outre de la poly(2-éthyl-2-oxazoline), éventuellement la concentration de poly(2-éthyl-2-oxazoline) dans l'adhésif activé par l'eau étant inférieure à 20 % en poids ;
(D) l'adhésif activé par l'eau comprend en outre de l'argile, éventuellement la concentration d'argile dans l'adhésif activé par l'eau étant inférieure à 10 % en poids.

7. Adhésif activé par l'eau selon l'une quelconque des revendications 1 à 6, ledit adhésif activé par l'eau comportant une teneur en solides allant de 25 % en poids à 70 % en poids.

8. Etiquette comprenant :
une couche de pellicule frontale pouvant recevoir des indices imprimés ; et
une couche adhésive comprenant l'adhésif activé par l'eau selon l'une quelconque des revendications 1 à 7.

9. Etiquette selon la revendication 8, ladite couche adhésive comportant un poids de revêtement allant de 5 gsm à 20 gsm.

10. Etiquette selon la revendication 8 ou 9, ladite étiquette ne comprenant pas de support.

11. Etiquette selon l'une quelconque des revendications 8 à 10, ladite couche de pellicule frontale comprenant un ou plusieurs matériaux choisis dans le groupe constitué par un ou plusieurs papiers, un ou plusieurs polymères, un ou plusieurs métaux, ou un ou plusieurs bois.

12. Procédé permettant la production d'un adhésif activé par l'eau, le procédé comprenant :
la fourniture d'alcool polyvinylique, de glycérine et d'une émulsion aqueuse d'acétate de vinyle ; et
la combinaison de l'alcool polyvinylique, la glycérine et l'émulsion aqueuse pour produire l'adhésif activé par l'eau,
ladite concentration d'alcool polyvinylique dans l'adhésif activé par l'eau allant de 25 % en poids à 45 % en poids.

13. Procédé selon la revendication 12, ledit adhésif activé par l'eau comprenant :
25 % en poids à 65 % en poids d'émulsion aqueuse d'acétate de vinyle ;
25 % en poids à 45 % en poids d'alcool polyvinylique ; et
3 % en poids à 10 % en poids de glycérine.

14. Procédé selon la revendication 12 ou 13, l'une et/ou l'autre des affirmations numérotées (A) et (B) suivantes s'appliquant :
(A) le procédé comprend en outre :
la fourniture de polyéthylène glycol ; et
ladite combinaison comprenant en outre l'ajout du polyéthylène glycol à l'alcool polyvinylique, la glycérine et l'émulsion aqueuse pour produire l'adhésif activé par l'eau ;
(B) le procédé comprend en outre :
la fourniture d'un ou plusieurs additifs choisis dans le groupe constitué par une ou plusieurs charges, un ou plusieurs pigments, un ou plusieurs agents antimousses, et un ou plusieurs agents mouillants ; et
ladite combinaison comprenant en outre l'ajout desdits un ou plusieurs additifs à l'alcool polyvinylique, la glycérine et l'émulsion aqueuse pour produire l'adhésif activé par l'eau.

15. Procédé selon l'une quelconque des revendications 12 à 14, l'une quelconque ou plusieurs des affirmations numérotées (A) à (D) suivantes s'appliquant :
(A) le procédé comprend en outre :
la fourniture de polyéthylèneimine ; et
ladite combinaison comprenant en outre l'ajout de la polyéthylèneimine à l'alcool polyvinylique, la glycérine et l'émulsion aqueuse pour produire l'adhésif activé par l'eau ;
(B) le procédé comprend en outre :
la fourniture d'un ester de rosine ; et
ladite combinaison comprenant en outre l'ajout de l'ester de rosine à l'alcool polyvinylique, la glycérine et l'émulsion aqueuse pour produire l'adhésif activé par l'eau ;
(C) le procédé comprend en outre :
la fourniture de poly(2-éthyl-2-oxazoline) ; et
ladite combinaison comprenant en outre l'ajout de la poly(2-éthyl-2-oxazoline) à l'alcool polyvinylique, la glycérine et l'émulsion aqueuse pour produire l'adhésif activé par l'eau ;
(D) le procédé comprend en outre :
la fourniture d'argile ; et
ladite combinaison comprenant en outre l'ajout de l'argile à l'alcool polyvinylique, la glycérine et l'émulsion aqueuse pour produire l'adhésif activé par l'eau.
